# EUROPEAN PATENT APPLICATION

(11) **EP 4 697 665 A1**
(43) Date of publication of application: **18.02.2026**
(21) Application number: 23935027.5
(22) Date of filing: 17.11.2023
(51) Int. Cl.: H04L 41/0803

(54) **INTENT RECOGNITION METHOD, DEVICE, AND STORAGE MEDIUM**

(30) Priority: 24.04.2023 CN 202310473113
(71) Applicant: ZTE Corporation, Shenzhen, Guangdong 518057 (CN)
(72) Inventor: AN, Shunyu, Shenzhen, Guangdong 518057 (CN)
(74) Representative: Ziebig Hengelhaupt Intellectual Property Attorneys Patentanwaltskanzlei PartGmbB
(86) International application number: PCT/CN2023/132267
(87) International publication number: WO 2024/221859

(57) **Abstract**

Provided are an intent recognition method, a device, and a storage medium. The method comprises: receiving target information, wherein the target information comprises a service demand of a target user; extracting key information in the target information, wherein the key information comprises: service implementation position information, service implementation time information, service feature information, an identifier of a logical network element for implementing a service, an identifier of a network device for implementing a service, an identifier of a terminal device for implementing a service, and/or an identifier of application software for implementing a service; on the basis of the key information, generating and outputting a target instance, wherein the target instance is used for representing intent input information; and receiving an operation on the target instance to complete intent recognition, wherein the operation comprises selection, confirmation, and/or modification.

## Description

The present disclosure claims a priority to Chinese Patent Application No. 202310473113.2, and filed on April 24, 2023, the entire content of which is incorporated into the present application by reference.

### TECHNICAL FIELD

The present disclosure relates to the field of network operation and maintenance, and in particular, to a method for intent recognition, a device, and a storage medium.

### BACKGROUND

Intent-based network was first proposed in 2017, and a network system is also referred to as an intent network. The intent network is a network that automatically converts service requirements input by a user into network configuration strategies. Due to the ever-changing service requirements and the complexity of intent network operation and maintenance, in order to reduce the difficulty of intent network operation and maintenance, it is necessary to improve the input effectiveness of the intent network.

### SUMMARY

In an aspect, the embodiments of the present disclosure provide a method for intent recognition. The method for intent recognition includes: receiving target information, where the target information includes a service requirement of a target user; extracting key information from the target information; where the key information includes: service implementation location information, service implementation time information, service feature information, a logical network element identifier for implementing a service, a network device identifier for implementing a service, a terminal device identifier for implementing a service, and/or an application software identifier for implementing a service; generating a target instance based on the key information, and outputting the target instance; where the target instance is used to represent intent input information; and receiving an operation on the target instance to complete the intent recognition; where the operation includes: selection, confirmation and/or modification.

In another aspect, the embodiments of the present disclosure provide an electronic device. The electronic device includes: a receiving unit, configured to receive target information, where the target information includes a service requirement of a target user; an extracting unit, configured to extract key information from the target information; where the key information includes: service implementation location information, service implementation time information, service feature information, a logical network element identifier for implementing a service, a network device identifier for implementing a service, a terminal device identifier for implementing a service, and/or an application software identifier for implementing a service; a generating unit, configured to generate a target instance based on the key information and output the target instance, where the target instance is used to represent intent input information; and a receiving unit, configured to receive an operation on the target instance to complete the intent recognition; where the operation includes: selection, confirmation and/or modification.

In yet another aspect, the embodiments of the present disclosure provide an electronic device. The electronic device includes: a memory and a processor; where the memory and the processor are coupled with each other; the memory is configured to store a computer program; the processor, when executing the computer program, implements the method for intent recognition described in any one of the above aspects.

In yet another aspect, the embodiments of the present disclosure provide a computer readable storage medium. The computer readable storage medium has stored computer program instructions thereon, and the computer program instructions, when executed by a processor, implement the method for intent recognition described in any one of the above aspects.

In yet another aspect, the embodiments of the present disclosure provide a computer program product. The computer program product includes computer program instructions, and the computer program instructions, when executed by a processor, implement the method for intent recognition described in any one of the above aspects.

### BRIEF DESCRIPTION OF THE DRAWINGS

In order to illustrate technical solutions in the present disclosure more clearly, the drawings to be used in some embodiments of the present disclosure will be introduced briefly. Obviously, the drawings to be described below are merely drawings of some embodiments of the present disclosure, and those ordinary skilled in the art may also obtain other drawings according to these drawings.
FIG. 1 is a diagram of an implementation environment involved in a method for intent recognition according to some embodiments.
FIG. 2 is a schematic diagram of a target instance according to some embodiments.
FIG. 3 is a schematic diagram of another target instance according to some embodiments.
FIG. 4 is a schematic diagram of yet another target instance according to some embodiments.
FIG. 5 is a schematic diagram of yet another target instance according to some embodiments.
FIG. 6 is a schematic diagram of yet another target instance according to some embodiments.
FIG. 7 is a flow chart of a method for intent recognition according to some embodiments.
FIG. 8 is a schematic diagram of a target intent template according to some embodiments.
FIG. 9 is a schematic diagram of another target intent template according to some embodiments.
FIG. 10 is a schematic diagram of yet another target instance according to some embodiments.
FIG. 11 is a schematic diagram of yet another target instance according to some embodiments.
FIG. 12 is a structural schematic diagram of an electronic device according to some embodiments.
FIG. 13 is a structural schematic diagram of another electronic device according to some embodiments.

### DETAILED DESCRIPTION

In order to enable those skilled in the art to better understand technical solutions of the embodiments of the present disclosure, the technical solutions in the present disclosure will be described below clearly and completely with reference to the drawings. Obviously, the described embodiments are merely some but not all of the embodiments of the present disclosure. All other embodiments obtained based on the embodiments of the present disclosure by the ordinary skilled in the art without paying any creative effort, shall be included in the protection scope of the present disclosure.

It should be noted that in the present disclosure, the expressions such as "exemplary/exemplarily" or "for example" are used to present an example, illustration, or explanation. Any embodiment or design solution described as "exemplarily" or "for example", etc., in the present disclosure should not be construed as preferred or advantageous over other embodiments or design solutions. Rather, the usage of the expressions, such as "exemplary/exemplarily" or "for example", is intended to present relevant concepts in a detailed manner.

Hereinafter, the terms such as "first", "second", etc., are used only for descriptive purposes and cannot be construed as indicating or implying relative importance or implicitly indicating the number of the indicated technical features. Thus, features defined with "first" or "second", etc., may explicitly or implicitly include one or more of the features.

In the description of the present disclosure, unless otherwise specified, the symbol "/" means "or", for example, "A/B" may mean A or B. Herein, "and/or" merely describes an association relationship of associated objects, and means that there are three kinds of relationships, and for example, A and/or B may mean: only A, only B, and both A and B. In addition, "at least one" means one or more, and the "more" or variants thereof means two or more.

In some technologies, when the intent recognition of service requirements of users is performed based on intent networks, it is assumed that the service requirements input by the users are accurate and error free. In this case, if the user has insufficient experience or has insufficient understanding of the network environment and service requirements, the input service requirements may deviate significantly from the actual service requirements, which will result in the network configuration strategy output by the intent network not satisfying the actual service requirements, and the user may be required to input or modify the requirements a plurality of times, reducing the efficiency of intent recognition and wasting system resources.

Based on this, the embodiments of the present disclosure propose a method for intent recognition, which confirms intent input information of an input service requirement when the intent recognition is performed. First, after receiving target information containing the service requirement input by a target user, key information in the target information is extracted; secondly, a target instance is generated and output based on the key information; finally, operations such as selection, confirmation and/or modification of the target instance are received. It can be understood that, in this method, the target user determines the target instance representing the intent input information to avoid the problem that a service requirement input in the existing intent network does not match an actual service requirement, improve the efficiency of intent recognition, and save system resources.

The implementations of the embodiments of the present disclosure are described in detail below in conjunction with the drawings.

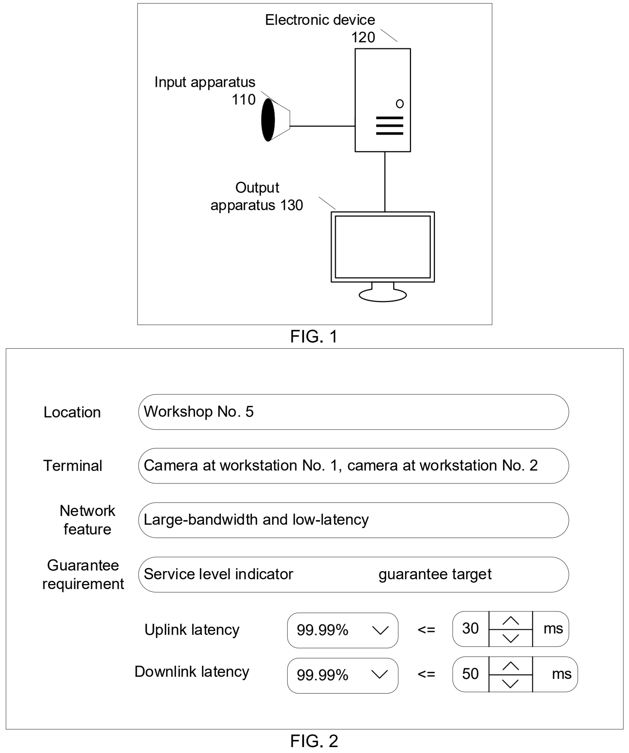

Please refer to FIG. 1, FIG. 1 is an implementation environment involved in a method for intent recognition according to some embodiments. The implementation environment includes: an input apparatus 110, an electronic device 120 and an output apparatus 130.

The input apparatus 110 is used to input a service requirement (i.e., target information) of a target user and receive operations, such as confirmation, selection, or modification input by the target user.

For example, the input apparatus 110 may be a device, such as a microphone, a keyboard, a handwriting board, or a touchscreen, etc.

The electronic device 120 is used for performing intent recognition. For example, the electronic device 120 receives the service requirement (i.e., target information) input by the input apparatus 110, processes and analyzes the service requirement, to obtain to-be-confirmed intent input information (i.e., target instance), and outputs the to-be-confirmed intent input information through the output apparatus 130.

Exemplarily, the electronic device 120 may be a terminal (e.g., a mobile phone, a tablet computer, a desktop computer, a laptop computer, a notebook computer, a netbook, etc.; the terminal may also be a server). The embodiments of the present disclosure do not particularly limit the form of the electronic device 120.

The output apparatus 130 is used to output the intent input information (i.e., the target instance).

Exemplarily, the output apparatus 130 may be a device such as a display screen, a speaker, etc.

The embodiments of the present disclosure do not limit the number of input apparatuses 110, electronic devices 120 and output apparatuses 130. The input apparatus 110, electronic device 120 and/or output apparatus 130 may be integrated together or independently provided. When the input apparatus 110, the electronic device 120 and/or the output apparatus 130 are independently provided, respective devices are connected by any one of means such as a wired network or wireless network, an installation distance between the input apparatus 110 and the output apparatus 130 is within a certain range, and an installation distance between the electronic device 120 and the input apparatus 110, or between the electronic device 120 and the output apparatus 130 is not limited.

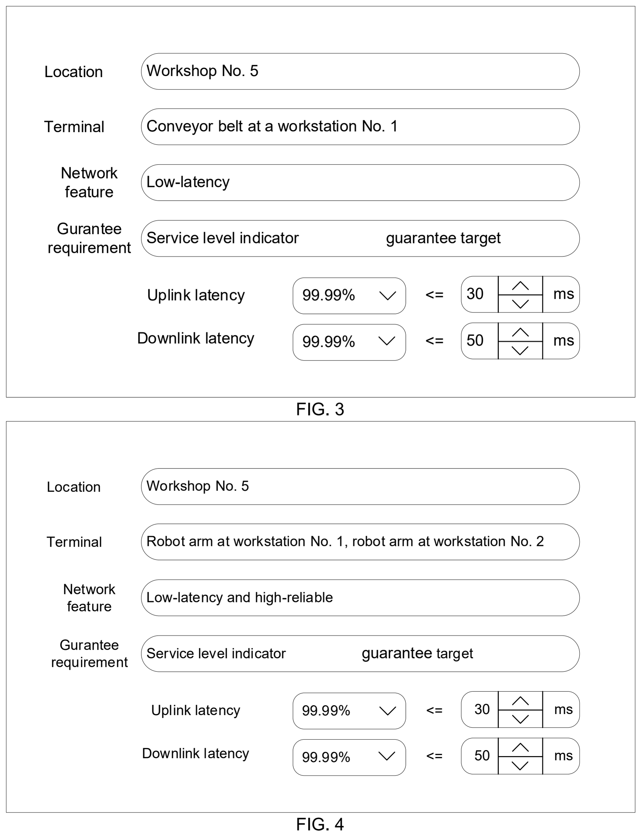

In an embodiment, the target user inputs the service requirement (i.e., target information) through the input apparatus 110: providing a large-bandwidth and low-latency network guarantee for the cameras at workstation No. 1 and workstation No. 2 in workshop No. 5, with the guarantee target requirement reaching 99.9%. The electronic device 120, after analyzing the service requirement, outputs the target instance shown in FIG. 2, FIG. 3 and/or FIG. 4 through the output apparatus 130. The target user confirms, selects or modifies the target instance shown in FIG. 2, FIG. 3 and/or FIG. 4 through the input apparatus 110 to complete the confirmation of the intent input information. The electronic device 120, after receiving the intent input information that is confirmed, completes the intent recognition.

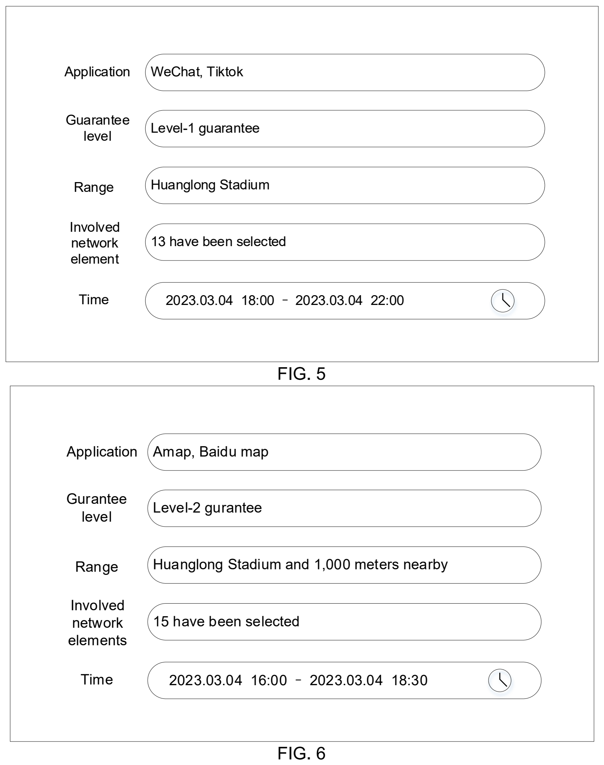

In another embodiment, the target user inputs a service requirement (i.e., target information) through the input apparatus 110: implementing a level-1 network guarantee for the concert at the Huanglong Stadium from 6 pm to 10 pm this Saturday. The electronic device 120, after analyzing the service requirement, outputs a target instance as shown in FIG. 5 and/or FIG. 6 through the output apparatus 130. The target user confirms, selects or modifies the target instance shown in FIG. 5 and/or FIG. 6 through the input apparatus 110 to complete the confirmation of the intent input information. The electronic device 120, after receiving the intent input information that is confirmed, completes the intent recognition.

The method for intent recognition provided in the embodiments of the present disclosure may be applied to an electronic device 120. Alternatively, the method for intent recognition may be applied to an application (APP) of the electronic device 120 that provides an intent recognition function, or applied to a central processing unit (CPU) in the electronic device 120, or applied to a control module in the electronic device 120 for performing the method for intent recognition. Taking an example in which the method provided in the embodiments of the present disclosure is applied to an electronic device for explanation below.

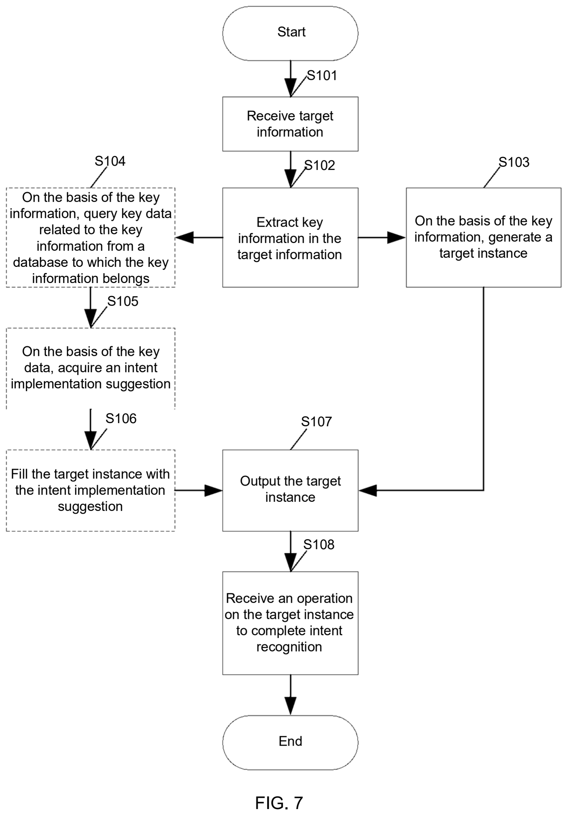

FIG. 7 is a flow chart of a method for intent recognition according to some embodiments. This method for intent recognition may be applied to the above electronic device. As shown in FIG. 7, the method includes S101 to S108.

S101: an electronic device receives target information.

The target information includes a service requirement of a target user.

The target information may be information input into the electronic device by the target user through the input apparatus 110.

The target user is any one of users. Different users have different service requirements.

In an example, the target information includes: providing a large-bandwidth and low-latency network guarantee for the cameras at workstation No. 1 and workstation No. 2 in workshop No. 5, with the guarantee target requirement reaching 99.9%.

In another example, the target information includes: implementing a level-1 network guarantee for the concert at Huanglong Stadium from 6 pm to 10 pm this Saturday.

S102: the electronic device extracts key information from the target information.

The key information includes: service implementation location information, service implementation time information, service feature information, a logical network element identifier for implementing the service, a network device identifier for implementing the service, a terminal device identifier for implementing the service, and/or an application software identifier for implementing the service.

The types of key information (for example, time type, location type, etc.) are preset in the electronic device. These types of information may represent the service requirement of target user. The electronic device extracts information of the types included in the preset types in the target information based on the preset types. For example, the electronic device has preset the time type and the location type, and the target information includes information of the time type. If the time type belongs to a type preset in the electronic device, the electronic device extracts the information of the time type.

In an example, the target information includes: providing a large-bandwidth and low-latency network guarantee for the cameras at workstation No. 1 and workstation No. 2 in workshop No. 5, with the guarantee target requirement reaching 99.9%, the key information extracted by the electronic device includes: service implementation location information "workshop 5", a terminal device identifier for implementing the service "cameras at workstation No. 1 and workstation No. 2", service feature information "large-bandwidth and low-latency" and "guarantee target requirement reaching 99.9%".

In another example, the target information includes: implementing level-1 network guarantee for the concert at the Huanglong Stadium from 6 pm to 10 pm this Saturday and the key information extracted by the electronic device includes: service implementation time information "6 pm to 10 pm this Saturday", service implementation location information "Huanglong Stadium", and service feature information "level-1 guarantee".

S103: the electronic device generates a target instance based on the key information.

The target instance is used to represent intent input information.

For example, S103 may include S103a to S103b.

S103a: the electronic device determines a target intent template based on the key information in the target information.

The intent template is preset based on different service requirement scenarios and the intent template contains a type structured representation of key information in a fixed format. The target intent template is a template with a matching degree in which the key information exceeds a matching threshold, or the target intent template is a template with a highest matching degree among matching degrees of a plurality of intent modules.

The service requirement scenario represents a scenario in which a service is to be applied (for example, an end-to-end network guarantee scenario, an energy-saving scenario, or an application guarantee scenario).

Different service requirement scenarios require different network operation and maintenance requirements and different service contents. Therefore, different intent templates may be constructed based on the service requirement scenarios to satisfy service requirements.

The type of key information is a summary of the type to which the key information belongs (including: location, time, service feature, logical network element, network device, terminal device, and/or application software, etc.).

The above method for determining the target intent template may include, for example, S1 to S2.

S1: the electronic device matches the key information with the plurality of intent templates from at least one dimension and obtains a plurality of matching degrees respectively.

The dimension may also be understood as direction or angle, that is, the electronic device matches the key information with the plurality of intent templates from different directions or angles.

Each intent template corresponds to a matching degree.

The dimension includes: permission information of the target user, a type weight of the key information, a quantity of the key information and/or a historical intent of the target user. The type weight of key information is used to represent the importance of a type of key information in a case where the key information is matched with the plurality of intent templates. The higher the type weight of key information, the higher a matching degree.

The permission information includes: an operation that the user may perform, a type of operation object, a scope of the operation object, a location area of the operation, an effective period of the permission, etc.

When the dimension includes the permission information of the target user, the electronic device selects an intent template that satisfies the permission of the target user from the plurality of intent templates, sets the matching degree of the intent template that satisfies the permission of the target user to 1, and sets the matching degree of the intent template that does not satisfy the permission of the target user to 0.

Since different users have different permissions, the operations that each user may perform, the type of operation object, the scope of the operation object, the location area of the operation, the effective period of the permission, etc. are all different and thus, the intent template selected based on permission information of the target user that satisfies permissions of the target user is also different.

In an example, the permission of the target user includes: being capable of using template 1 to template 10, and the electronic device sets the matching degree of intent template 1 to template 10 to 1, and sets the matching degree of the remaining intent templates to 0.

When the dimension includes weights of types of the key information, the electronic device calculates weights of the plurality of intent templates respectively based on the type weight of the key information, and uses the weight of each intent template as the matching degree of the intent template.

In an example, the key information includes: service implementation location information, service implementation time information, a logical network element identifier for implementing the service, and a network device identifier for implementing the service. A weight of the service implementation location is 1, a weight of the service implementation time is 0.8, a weight of the logical network element for implementing the service is 0.6, and the weight of the network device for implementing the service is 0.4. If the key information included in an intent template No. 1 is: service implementation location, service implementation time, and a logical network element for implementing the service, a weight of the intent template No. 1 is 2.4, that is, a matching degree of the intent template No. 1 is 2.4. If the type of key information included in an intent template No. 2 is: the logical network element for implementing the service and a network device for implementing the service, then a weight of intent template No. 2 is 1, that is, a matching degree of intent template No. 2 is 1.

When the dimension includes a number of key information, the electronic device scores the plurality of intent templates respectively according to the number of key information included in the plurality of intent templates, and uses the score for each intent template as the matching degree of each intent template.

In an example, the key information includes: service implementation location information, service implementation time information, a logical network element identifier for implementing the service, and a network device identifier for implementing the service. If the type of key information included in the intent template No. 1 is: the service implementation location, the service implementation time and the logical network element for implementing the service, then key information data included in the intent template No. 1 is 3, and the intent template No. 1 is scored 3 points; if the type of key information included in the intent template No. 2 is: the logical network element for implementing the service and the network device for implementing the service, then key information data included in the intent template No. 2 is 2, and the intent template No. 2 is scored 2 points.

When the dimension includes the historical intent of the target user, the electronic device uses the historical intent template used by the target user as one of the target intent templates.

Based on the above examples, when at least one dimension includes the permission information of the target user, the weights of types of key information, and the number of key information, the electronic device first screens out the intent templates that satisfy the permissions of the target user based on the above screening conditions, which may be referred to as candidate intent templates, and then calculates the weights of types and scores the number of key information for the candidate intent templates and adds values of the weights of types and score of the number of key information for each candidate intent template, to obtain the matching degree of each candidate intent template.

S2: the electronic device selects a target intent template based on the plurality of matching degrees.

Based on the examples of the plurality of template matching degrees in S1, the electronic device uses the historical intent template of the target user and the intent template with the highest matching degree or exceeding the matching threshold among the plurality of candidate intent templates as the target intent template.

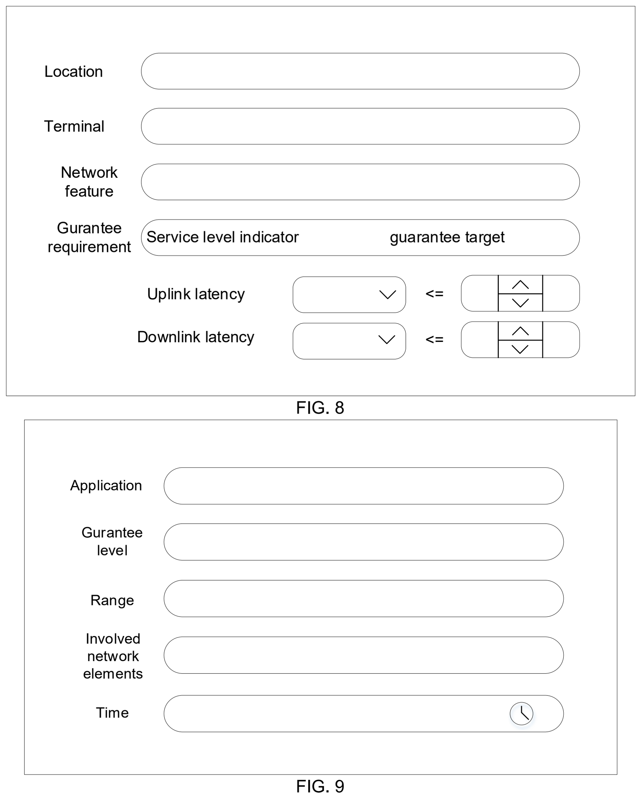

In an example, the key information includes: the service implementation location information "workshop No. 5", the terminal device identifier for implementing the service "cameras at workstation No. 1 and workstation No. 2", the service feature information "large-bandwidth and low-latency" and "guarantee target requirement reaching 99.9%. "As shown in FIG. 8, FIG. 8 is a target intent template selected based on the above key information.

In another example, the key information includes: the service implementation time information "6 pm to 10 pm this Saturday", the service implementation location information "Huanglong Stadium", and the service feature information "level-1 guarantee", as shown in FIG. 9. FIG. 9 is a target intent template selected based on the above key information.

S103b: the electronic device fills the key information into the target intent template to generate a target instance.

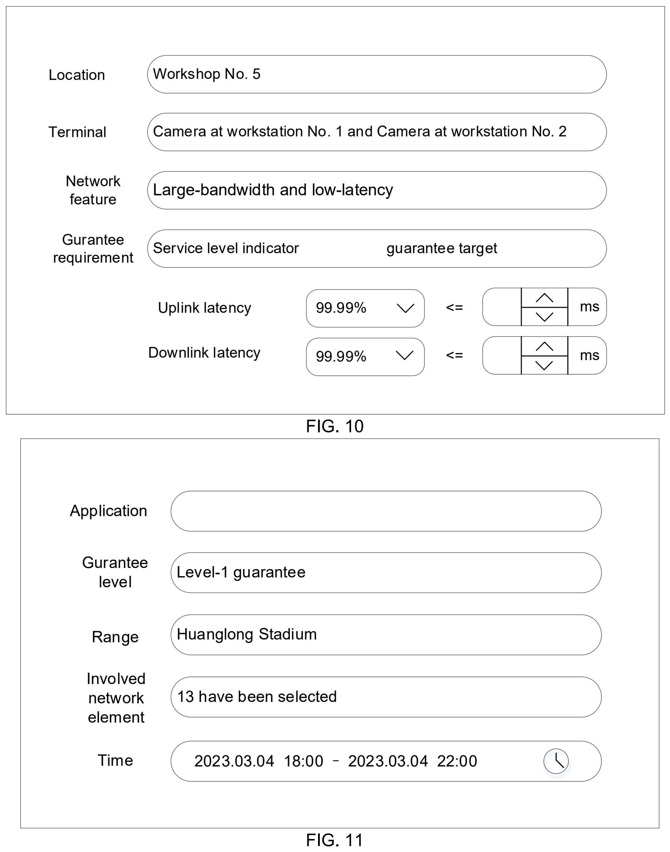

In an example, the key information includes: the service implementation location information "workshop No. 5", the terminal device identifier for implementing the service "cameras at workstation No. 1 and workstation No. 2", the service feature information "large-bandwidth and low-latency" and "guarantee target requirement reaching 99.9%. "Fill the "workshop No. 5", "cameras at workstation No. 1 and workstation No. 2", "large-bandwidth and low-latency", and "guarantee target requirement reaching 99.9%" above-mentioned into the target intent template shown in FIG. 8, to obtain the target instance shown in FIG. 10.

In another example, the key information includes: the service implementation time information "6 pm to 10 pm this Saturday", the service implementation location information "Huanglong Stadium", and the service feature information "level-1 guarantee". Fill the "6 pm to 10 pm this Saturday", "Huanglong Stadium" and "level-1 guarantee" mentioned-above into the target intent template shown in FIG. 9, to obtain the target instance shown in FIG. 11.

The target instances shown in FIG. 10 and FIG. 11 are only examples. When the plurality of target intent templates are selected, the electronic device will generate a plurality of target instances accordingly.

Generating the target instance through the intent template may to a certain extent, supplement the service requirement information input by the target user while simplifying the format of the target instance and making the output to-be-determined intent input information simpler and clearer.

Please continue to refer to FIG. 7, S104: the electronic device queries key data related to the key information from a database to which the key information belongs based on the key information.

The key data includes configuration information, operation and maintenance status information, and/or an intent and implementation effect.

In response to that the key information includes first information, the key data related to the key information includes: first data, second data and/or third data.

The first information includes: the service implementation location information, and/or the service implementation time information.

The first data includes: the intent and implementation effect conforming to the first information. For example: an executing intent, a planning intent and/or a historical intent and implementation effect conforming to the first information.

The executing intent and implementation effect conforming to the first information is a real-time implementation effect of the intent being executed at that location and/or time.

The planning intent and implementation effect conforming to the first information is a predicted implementation effect of the intent of the planning execution at that location and/or time.

The historical intent and implementation effect conforming to the first information is the intent and implementation effect that have been completed at that location and/or time.

In an example, the first information includes: the service implementation location information "Huanglong Stadium", the service implementation time information "6 pm to 10 pm this Saturday", then query the database to which the service implementation location information belongs for "Huanglong Stadium", and/or, query the database to which the service implementation time information belongs for the execution intent and implementation effects related to "this Saturday evening from 6 to 10", the predicted implementation effects of the planned execution intents, and the completed intent and implementation effects.

The second data includes: the configuration information, operation and maintenance status information and/or the intent and implementation effect of the logical network element conforming to the service implementation location. The configuration information of the logical network element conforming to the service implementation location includes: capacity information; the operation and maintenance status information of the logical network element conforming to the service implementation location includes: a terminal access quantity, an alarm, and performance data; the intent and implementation effect of the logical network elements conforming to the implementation location include: an existing intent and implementation effect.

The above capacity information is the maximum terminal access quantity that the logical network element can withstand.

In an example, the service implementation location is "Huanglong Stadium", and the second data includes: "capacity information" of the logical network element covering "Huanglong Stadium", "peak terminal access quantity and normal terminal access quantity" of "Huanglong Stadium", the alarm, the performance data, and/or, the existing intent and implementation effect of "Huanglong Stadium".

The third data includes: the configuration information, the operation and maintenance status information and/or the intent and implementation effect of the terminal device conforming to the first information. The configuration information of the terminal device conforming to the first information includes: a type of accessed terminal of the terminal device, the service implementation location and/or the service implementation time.

In an example, the first information includes: the service implementation location information "workshop No. 5", and the third data includes: the terminal device of "workshop No. 5" is "cameras at workstation No. 1 and workstation No. 2", and the types of accessed terminals of "cameras at workstation No. 1 and workstation No. 2" is "a conveyor belt at the workstation No. 1, a robot arm at the workstation No. 1 and a robot arm at workstation No. 2".

In response to the key information includes the logical network element identifier for implementing the service, the key data related to the key information includes: fourth data. The fourth data includes: configuration information, operation and maintenance status information and/or an intent and implementation effect of the logical network element for implementing the service. The configuration information of the logical network element for implementing the service includes: capacity information; the operation and maintenance status information of the logical network element for implementing the service includes: an alarm and/or performance data; the intent and implementation effect of the logical network element for implementing the service includes: an existing intent and implementation effect.

In response to the key information includes the network device identifier for implementing the service, the key data related to the key information includes: fifth data. The fifth data includes: configuration information, operation and maintenance status information and/or an intent and implementation effect of the network device for implementing the service. The configuration information of the network device for implementing the service includes: capacity information; the operation and maintenance status information of the network device for implementing the service includes: an alarm and/or performance data; the intent and implementation effect of the network device for implementing the service includes: an existing intent and implementation effect.

In response to the key information includes the terminal device identifier for implementing the service, the key data related to the key information includes: sixth data. The sixth data includes: terminal configuration information, operation and maintenance status information and/or an intent and implementation effect of the terminal device for implementing the service. The terminal configuration information of the terminal device for implementing the service includes: a type of the terminal, the identifiers of terminals with the same type, an application software connected to the terminal, other terminals connected to the application software connected to the terminal, the types of other terminals connected to the application software connected to the terminal, and/or port configuration information; the intent and implementation effect of the terminal device for implementing the service include: an existing intent and implementation effect, existing intent and implementation effects of terminals with the same type, and/or an existing intent and implementation effects of other terminals connected to the application software connected to the terminal.

In an example, the key information includes: "cameras at workstation No. 1 and workstation No. 2", and the sixth data includes: models of "cameras at workstation No. 1 and workstation No. 2", the existing intent network guarantee requirement and configuration information of the cameras of this model, and the applications connected to "cameras at workstation No. 1 and workstation No. 2", and other terminals connected to the application include a conveyor belt at workstation No. 1, a robot arm at workstation No. 1 and a robot arm at workstation No. 2.

In response to the key information includes the application software identifier for implementing the service, the key data related to the key information includes: seventh data. The seventh data includes: configuration information, operation and maintenance status information and/or an intent and implementation effect of the application software for implementing the service. The configuration information of the application software for implementing the service includes: port configuration information of the application software for implementing the service, the type of application, a terminal that accesses the application software, and/or the types of terminals. The intent and implementation effect of the application software for implementing the service include: the existing intent and implementation effect with the same type of application, and the existing intent and implementation effect of the same type of terminal that accesses the application software.

S105: the electronic device acquires an intent implementation suggestion based on the key data.

The intent implementation suggestion is based on the key data of the key information to reasonably expand and improve service requirements.

For example, S105 includes S105a to S105b.

S105a: the electronic device inputs the second data, the fourth data and/or the fifth data into a network evaluation model to obtain network statuses and future change prediction results of the second data, the fourth data and/or the fifth data respectively.

In an example, the electronic device inputs the identifier, capacity information, the existing intent and implementation effects of the logical network elements and cells covering "workshop No. 5" into the network evaluation model, to obtain the network status and future change prediction results of the identifier, capacity information, the existing intent and implementation effects of the logical network elements and cells covering "workshop No. 5".

In another example, the electronic device inputs the identifier, the capacity information, "peak terminal access amount and normal terminal access amount" of the "Huanglong Stadium" of the logical network elements and cells covering the "Huanglong Stadium" into the network evaluation model, to obtain the network status and future change prediction results of the identifier, the capacity information, "peak terminal access amount and normal terminal access amount" of the "Huanglong Stadium" of the logical network elements and cells covering the "Huanglong Stadium".

S105b: the electronic device inputs the network status and future change prediction results of the second data, the fourth data and/or the fifth data, and the key data related to the key information into a target algorithm model, to obtain the intent implementation suggestion.

The target algorithm model is an algorithm model developed based on expert experience.

In an example, the electronic device inputs the identifier, capacity information, the existing intent and implementation effects of the logical network elements and cells covering "workshop No. 5", the network status and future change prediction results, and the first data: all executing intents, planning intents and/or historical intents of "workshop No. 5", and the implementation effects; the second data: the identifier, capacity information, the existing intent and implementation effects of the logical network elements and cells covering "workshop No. 5"; the sixth data: models of "cameras at workstation No. 1 and workstation No. 2", the network guarantee requirements and configuration information of the existing intents of cameras of this model, and other associated terminals connected to "cameras at workstation No. 1 and workstation No. 2", including the conveyor belt at workstation No. 1 and workstation No. 1, to the target algorithm model to obtain intent implementation suggestions.

The intent implementation suggestions in this example include: providing a large-bandwidth and low-latency network guarantee for the cameras at workstation No. 1 and workstation No. 2 in workshop No. 5, with guaranteeing a target requirement reaching 99.9%, guaranteeing a target uplink latency being less than equal to 30ms, and a downlink latency being less than or equal to 50ms; or providing a low-latency network guarantee for the conveyor belt at workstation No. 1 in workshop No. 5, with guaranteeing a target requirement reaching 99.9%, guaranteeing a target uplink latency being less than equal to 30ms, and a downlink latency being less than equal to 50ms; or providing low-latency, high-reliable network guarantee for the robotic arms at workstation No. 1 and workstation No. 2 in workshop No. 5, with guaranteeing a target requirement reaching 99.9%, guaranteeing a target uplink latency being less than equal to 30ms, and a downlink latency being less than equal to 50ms.

In another example, the electronic device inputs the identifier, capacity information, the network status and future change prediction results of the "peak terminal access amount and normal terminal access amount" of the "Huanglong Stadium" of the logical network elements and cells covering the "Huanglong Stadium", and the first data: all executing intents, all planning intents and/or all historical intents, and the implementation effects of the "Huanglong Stadium", and the second data: the identifier, the capacity information, the "peak terminal access amount and normal terminal access amount" of the "Huanglong Stadium", the existing intent and implementation effects of the "Huanglong Stadium" covering the logical network elements and cells of the "Huanglong Stadium", into the target algorithm model to obtain intent implementation suggestions.

The intent implementation suggestions in this example include: implementing level-2 guarantee for Autonavi Navigation and Baidu Navigation accessing terminals within 1,000 meters of the Huanglong Stadium from 4:00 to 6:00 p.m. on Saturday; or implementing level-1 guarantee for WeChat and TikTok accessing terminals within the Huanglong Stadium from 6 pm to 10 pm on Saturday.

The electronic device may perform S103 first, or perform S104-S105 first, or perform S103 and S104-S105 simultaneously. The embodiments of the present disclosure do not limit the sequential order in which the electronic device performs S103 and S104-S105.

The above S104-S105 are optional contents. The intent implementation suggestions are based on a comprehensive evaluation of an empirical model and a network model, which may compensate for the problem of insufficient understanding of service requirements by target users, to some extent, and make the intention input information more in line with the real requirements of users.

S106 (in some embodiments): the electronic device fills the intent implementation suggestions into the target instance.

In an example, the electronic device fills the intent implementation suggestions: providing a large-bandwidth and low-latency network guarantee for the cameras at workstation No. 1 and workstation No. 2 in workshop No. 5, with guaranteeing a target requirement reaching 99.9%, guaranteeing a target uplink latency being less than equal to 30ms, and a downlink latency being less than or equal to 50ms; or providing low-latency network guarantee for the conveyor belt at workstation No. 1 in workshop No. 5, with guaranteeing a target requirement reaching 99.9%, guaranteeing a target uplink latency being less than equal to 30ms, and a downlink latency being less than equal to 50ms; or providing low-latency, high-reliable network guarantee for the robotic arms at workstation No. 1 and workstation No. 2 in workshop No. 5, with guaranteeing a target requirement reaching 99.9%, guaranteeing a target uplink latency being less than equal to 30ms, and a downlink latency being less than equal to 50ms into the target instances, to obtain the target instances as shown in FIG. 2, FIG. 3 or FIG. 4, respectively.

In an example, the electronic device fills the intent implementation suggestions: implementing level-2 guarantee for AutoNavi and Baidu Navigation accessing terminals within 1,000 meters of the Huanglong Stadium from 4:00 to 6:00 p.m. on Saturday; or implementing level-1 guarantee for WeChat and TikTok accessing terminals within the Huanglong Stadium from 6 pm to 10 pm on Saturday into the target instances, to obtain the target instances as shown in FIG. 5 or FIG. 6, respectively.

In this step, the electronic device fills the intent implementation suggestion into the target instance, and then outputs the intent implementation suggestions by outputting the target instance. Alternatively, the electronic device may further output the intent implementation suggestion when the target instance is subsequently displayed, before the target instance is displayed, or after the target instance is displayed.

S107: the electronic device outputs the target instance.

In some embodiments, the target instance is displayed on a display screen.

This step allows the target user to intuitively check whether the service requirement analyzed by the electronic device is the service requirement that the target user actually wants to input through the output manner of a display screen, shortening an interaction path of the intent input of the target user and improving efficiency.

S108: the electronic device receives an operation on the target instance to complete intent recognition.

The above operations include: selection, confirmation and/or modification. For example, when the electronic device outputs a plurality of target instances, the target user may select a target instance that satisfies the service requirements of the target instance. When the target instance output by the electronic device is a target instance that satisfies the service requirements of the target user, the target user may confirm the target instance output by the target device. When some contents in the target instance output by the electronic device does not satisfy the service requirements of the target user, the target user may modify the contents in the target instance.

The intent recognition includes network operation and maintenance intent recognition.

Operations and maintenance refer to the operation and maintenance of various stages of the lifecycle of networks, servers, and services. Network operation and maintenance refers to the production organization and management activities adopted to guarantee the normal and effective operation of telecommunications networks and services, abbreviated as operation and maintenance management. Responsible for maintaining and guaranteeing high availability of the entire service, while continuously optimizing the system architecture to improve deployment efficiency.

In an example, the target user performs operations such as selecting, confirming, and/or modifying the target instances shown in FIG. 2, FIG. 3, and FIG. 4, or the target instances shown in FIG. 5 and FIG. 6. After the operations are completed, the electronic device completes the intent recognition based on the target instances based on the target instance operated by the target user.

This step may improve the service requirements analyzed by the electronic device, making the intent input information more relevant to the service requirements of the target user.

In some embodiments, the electronic device receives the operation on the target instance to confirm the intent input information; and performs the intent recognition based on the intent input information.

In the above method, an intent input information confirmation process is added before the traditional intent network performs intent recognition. This method is not required to change the structure of the traditional intent network, has a weak coupling relationship with the traditional intent network, and is highly implemented.

The method for intent recognition proposed in the embodiments of the present disclosure, intent input information of an input service requirement is required to be confirmed when the intent recognition is performed in the method. First, after receiving target information containing the service requirement input by a target user, key information in the target information is extracted; secondly, a target instance is generated and output based on the key information; finally, operations such as selection, confirmation and/or modification of the target instance are received. It can be understood that, in this method, the target user determines the target instance representing the intent input information to avoid the problem that a requirement input in the existing intent network does not match an actual service requirement, improve the efficiency of requirement analysis, and save system resources.

It can be understood that in order to achieve the functions mentioned above, an electronic device contains corresponding hardware structures and/or software modules for performing respective functions. Those skilled in the art should easily realize that the present disclosure can be implemented in the form of hardware or a combination of hardware and computer software, in combination with the algorithm steps of various examples described in the embodiments of the present disclosure. Whether a certain function is executed by hardware or by computer software driving hardware, depends on the specific applications and design constraint conditions of the technical solutions. Professional technicians may use different methods to implement the described functions for each specific application, but such an implementation should not be considered beyond the scope of the present disclosure.

In the embodiments of the present disclosure, the electronic device may be divided into functional modules according to the above-mentioned method embodiments, and for example, each functional module may be divided corresponding to each function, or two or more functions may also be integrated into one functional module. The above integrated module is implemented in the form of hardware or in the form of software. It should be noted that the division of modules in the embodiments of the present disclosure is illustrative, and is merely a kind of logical functional division, and there may be other division methods in actual implementations. The example in which each functional module is divided corresponding to each function, is taken for explanation below.

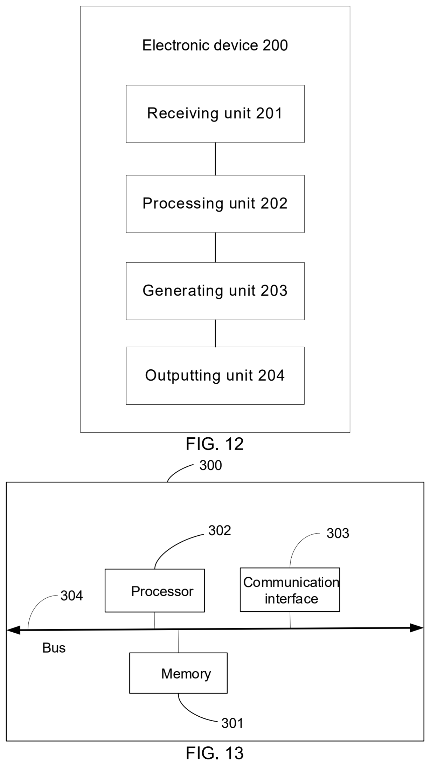

FIG. 12 is a schematic structural diagram of an electronic device according to some embodiments of the present disclosure, and the electronic device may perform the method for intent recognition provided in the above method embodiments. As shown in FIG. 12, the electronic device 200 includes: a receiving unit 201, is configured to receive target information, where the target information includes a service requirement of a target user; a processing unit 202, is configured to extract key information from the target information; where the key information includes: service implementation location information, service implementation time information, service feature information, an identifier of a logical network element for implementing a service, an identifier of a network device for implementing a service, an identifier of a terminal device for implementing a service, and/or an identifier of an application software for implementing a service; a generating unit 203, is configured to generate a target instance based on the key information, an outputting unit 204, is configured to output the target instance; where the target instance is used to represent intent input information; and a receiving unit 201, is further configured to receive an operation on the target instance to complete the intent recognition; where the operation includes: selection, confirmation and/or modification.

In some embodiments, the processing unit 202 is configured to determine a target intent template based on the key information in the target information, where the intent template is preset based on different service requirement scenarios and contains a type structured representation of key information in a fixed format, and the target intent template is a template in which a matching degree with the key information exceeds a matching threshold, or is a template with a highest matching degree among matching degrees of a plurality of modules; and fill the key information into the target intent template, to generate the target instance.

In some embodiments, the processing unit 202 is configured to match the key information with the plurality of templates from at least one dimension to obtain a plurality of matching degrees, respectively; where the at least one dimension includes: permission information of the target user, a type weight of the key information, a quantity of the key information, and/or a historical intent of the target user; the type weight of the key information is used to represent importance of a type of the key information when the key information is matched with the plurality of templates; the higher the type weight of the key information, the higher a matching degree; and select the target intent template from the plurality of templates based on the plurality of matching degrees.

In some embodiments, the processing unit 202 is also used to, after receiving the target information, query key data related to the key information from a database to which the key information belongs based on the key information, where the key data includes configuration information, operation and maintenance status information and/or an intent and implementation effect; and acquire an intent implementation suggestion based on the key data, and output the intent implementation suggestion.

In some embodiments, in response to that the key information includes first information, the key data related to the key information includes: first data, second data and/or third data. The first information includes: the service implementation location information and/or the service implementation time information. The first data includes: an intent and implementation effect that conforms to the first information and/or an intent and implementation effect. The second data includes: configuration information, operation and maintenance status information and/or an intent and implementation effect of a logical network element that conforms to the service implementation location. The third data includes: configuration information, operation and maintenance status information and/or an intent and implementation effect of a terminal device that conforms to the first information. Or, in response to that the key information includes the logical network element identifier for implementing the service, the key data related to the key information includes: fourth data. The fourth data includes: configuration information, operation and maintenance status information and/or an intent and implementation effect of the logical network element for implementing the service. Or, in response to that the key information includes the network device identifier for implementing the service, the key data related to the key information includes: fifth data. The fifth data includes: configuration information, operation and maintenance status information and/or an intent and implementation effect of the network device for implementing the service. Or, in response to that the key information includes the terminal device identifier for implementing the service, the key data related to the key information includes: sixth data. The sixth data includes: configuration information configured by a terminal, operation and maintenance status information and/or an intent and implementation effect of the terminal device for implementing the service. Or, in response to that the key information includes the application software identifier for implementing the service, the key data related to the key information includes: seventh data. The seventh data includes: configuration information, operation and maintenance status information and/or an intent and implementation effect of the application software for implementing the service.

In some embodiments, the processing unit 202 is configured to input the second data, the fourth data, and/or the fifth data into a network evaluation model, to obtain network statuses and future change prediction results of the second data, the fourth data, and/or the fifth data, respectively; and input the network statuses and future change prediction results of the second data, the fourth data and/or the fifth data, and the key data related to the key information into a target algorithm model, to obtain the intent implementation suggestion.

In some embodiments, the electronic device includes a display screen, and the outputting unit 204 is configured to display the target instance on the display screen.

In some embodiments, the intent recognition includes network operation and maintenance intent recognition.

In a case of implementing the functions of the integrated modules mentioned above in the form of hardware, the embodiments of the present disclosure provide another possible structure of an electronic device involved in the above embodiments. As shown in FIG. 13, the electronic device 300 includes a processor 302 and a bus 304. In some embodiments, the electronic device may further include a memory 301; in some embodiments, the electronic device may further include a communication interface 303.

The processor 302 may implement or perform various exemplary logical blocks, modules and circuits described in conjunction with the embodiments of the present disclosure. The processor 302 may be a central processing unit, a general-purpose processor, a digital signal processor, an application specific integrated circuit, a field programmable gate array or any other programmable logic device, a transistor logic device, a hardware component, or any combination thereof. It may implement or perform various exemplary logical blocks, modules and circuits described in conjunction with the embodiments of the present disclosure. The processor 302 may also be a combination that implements computing functions, for example, including a combination of one or more microprocessors, a combination of a digital signal processor (DSP) and a microprocessor, or the like.

The communication interface 303 is configured to connect with other devices via a communication network. The communication network may be an Ethernet, a radio access network, a wireless local area network (WLAN), or the like.

The memory 301 may be, but be not limited to, a read-only memory (ROM) or other types of static storage devices capable of storing static information and instructions, a random access memory (RAM) or other types of dynamic storage devices capable of storing information and instructions, or may also be an electrically erasable programmable read-only memory (EEPROM), a magnetic disk storage medium or other magnetic storage devices, or any other medium capable of being used to carry or store the desired program codes in the form of instructions or data structures and capable of being accessed by a computer.

As an implementation, the memory 301 may exist independently of the processor 302, and the memory 301 may be connected to the processor 302 via the bus 304 and is used for storing instructions or program codes. The processor 302, when calling and executing the instructions or program codes stored in the memory 301, is capable of implementing the method for intent recognition provided in the embodiments of the present disclosure.

As another implementation, the memory 301 may be integrated with the processor 302.

The bus 304 may be an extended industry standard architecture (EISA) bus or the like. Buses 304 may be divided into address buses, data buses, control buses, and the like. For the convenience of representation, only one thick line is used in FIG. 13 for representation, but it does not mean that there is only one bus or one type of bus.

Some embodiments of the present disclosure provide a computer readable storage medium (e.g., a non-transitory computer readable storage medium), and the computer readable storage medium has stored computer program instructions therein, and the computer program instructions, when executed on a computer, cause the computer to perform the method for intent recognition as described in any embodiment of the above-mentioned embodiments.

Exemplarily, the above-mentioned computer readable storage medium may include, but be not limited to, a magnetic storage device (e.g., a hard disk, a floppy disk or a magnetic tape, etc.), an optical disk (e.g., a Compact Disk (CD) or a Digital Versatile Disk (DVD), etc.), a smart card and a flash memory device (e.g., an Erasable Programmable Read-Only Memory (EPROM), a card, a stick or a key driver, etc.). The various computer readable storage media described in the present disclosure may represent one or more devices for storing information and/or other machine readable storage media for storing information. The term "machine readable storage medium" may include, but be not limited to, a radio channel and various other media capable of storing, containing, and/or carrying instructions and/or data.

Some embodiments of the present disclosure provide a computer program product including instructions, and the computer program product, when running on a computer, causes the computer to perform the method for intent recognition as described in any embodiment of the above-mentioned embodiments.

The above descriptions are only specific implementations of the present disclosure, but the protection scope of the present disclosure is not limited thereto, any changes or replacements within the technical scope disclosed in the present disclosure shall be included in the protection scope of the present disclosure. Therefore, the protection scope of the present disclosure shall be determined based on the protection scope of the claims.

## Claims

1. A method for intent recognition, **characterized by** comprising:
receiving target information, wherein the target information comprises a service requirement of a target user;
extracting key information from the target information; wherein the key information comprises: service implementation location information, service implementation time information, service feature information, a logical network element identifier for implementing a service, a network device identifier for implementing a service, a terminal device identifier for implementing a service, and/or an application software identifier of for implementing a service;
generating a target instance based on the key information, and outputting the target instance; wherein the target instance is used to represent intent input information; and
receiving an operation on the target instance, to complete the intent recognition;
wherein the operation comprises: selection, confirmation and/or modification.

2. The method according to claim 1, wherein generating the target instance based on the key information comprises:
determining a target intent template based on the key information in the target information, wherein the intent template is preset based on different service requirement scenarios and comprises a type structured representation of key information in a fixed format, and the target intent template is a template in which a matching degree with the key information exceeds a matching threshold, or is a template with a highest matching degree among matching degrees of a plurality of modules; and
filling the key information into the target intent template, to generate the target instance.

3. The method according to claim 2, wherein determining the target intent template based on the key information in the target information comprises:
matching the key information with the plurality of templates from at least one dimension, to obtain a plurality of matching degrees, respectively; wherein the at least one dimension comprises: permission information of the target user, a type weight of the key information, a quantity of the key information, and/or a historical intent of the target user; the type weight of the key information is used to represent importance of a type of the key information in a case where the key information is matched with the plurality of templates; the higher the type weight of the key information, the higher a matching degree; and
selecting the target intent template from the plurality of templates based on the plurality of matching degrees.

4. The method according to any one of claims 1 to 3, wherein after receiving the target information, the method further comprises:
querying key data related to the key information from a database to which the key information belongs, based on the key information, wherein the key data comprises configuration information, operation and maintenance status information and/or an intent and implementation effect; and
acquiring an intent implementation suggestion based on the key data, and outputting the intent implementation suggestion.

5. The method according to claim 4, wherein
in response to that the key information comprises first information, the key data related to the key information comprises: first data, second data and/or third data; the first information comprises: the service implementation location information and/or the service implementation time information; the first data comprises: an intent and implementation effect that conforms to the first information; the second data comprises: configuration information, operation and maintenance status information and/or an intent and implementation effect of a logical network element that conforms to a service implementation location; and the third data comprises: terminal configuration information, operation and maintenance status information and/or an intent and implementation effect of a terminal device that conforms to the first information; or
in response to that the key information comprises the logical network element identifier for implementing the service, the key data related to the key information comprises: fourth data; and the fourth data comprises: configuration information, operation and maintenance status information and/or an intent and implementation effect of a logical network element for implementing the service; or
in response to that the key information comprises the network device identifier for implementing the service, the key data related to the key information comprises: fifth data; and the fifth data comprises: configuration information, operation and maintenance status information and/or an intent and implementation effect of a network device for implementing the service; or
in response to that the key information comprises the terminal device identifier for implementing the service, the key data related to the key information comprises: sixth data; and the sixth data comprises: terminal configuration information configured by a terminal, operation and maintenance status information and/or an intent and implementation effect of a terminal device for implementing the service; or
in response to that the key information comprises the application software identifier for implementing the service, the key data related to the key information comprises: seventh data; and the seventh data comprises: configuration information, operation and maintenance status information and/or an intent and implementation effect of an application software for implementing the service.

6. The method according to claim 5, wherein acquiring the intent implementation suggestion based on the key data comprises:
inputting the second data, the fourth data, and/or the fifth data into a network evaluation model, to respectively obtain network statuses and future change prediction results of the second data, the fourth data, and/or the fifth data; and
inputting the network statuses and the future change prediction results of the second data, the fourth data and/or the fifth data, and the key data related to the key information into a target algorithm model, to obtain the intent implementation suggestion.

7. The method according to claim 1, wherein the electronic device comprises a display screen, and outputting the target instance comprises:
displaying the target instance on the display screen.

8. The method according to claim 1, wherein
the intent recognition comprises network operation and maintenance intent recognition.

9. An electronic device, **characterized by** comprising a memory and a processor; the memory and the processor are coupled with each other; the memory is configured to store computer program codes, the computer program codes comprise computer instructions; and wherein when the processor executes the computer instructions, so that the electronic device performs the method for intent recognition according to any one of claims 1 to 8.

10. A computer readable storage medium, **characterized in that** the computer readable storage medium has stored computer instructions thereon, and wherein the computer instructions, when executed on an electronic device, cause the electronic device to perform the method for intent recognition according to any one of claims 1 to 8.
